# EUROPEAN PATENT SPECIFICATION

(11) **EP 1 927 193 B1**
(45) Date of publication and mention of the grant of the patent: **23.04.2014**
(21) Application number: 05784875.6
(22) Date of filing: 19.09.2005
(51) Int. Cl.: H04W 72/08, H04W 72/04

(54) **METHOD FOR SETTING POWER LEVELS FOR USER EQUIPMENTS**
VERFAHREN ZUM EINSTELLEN VON LEISTUNGSPEGELN FÜR BENUTZERGERÄTE
PROCEDE POUR DEFINIR LES NIVEAUX DE PUISSANCE DES EQUIPEMENTS UTILISATEUR

(43) Date of publication of application: 04.06.2008
(73) Proprietor: Telefonaktiebolaget LM Ericsson (publ), 164 83 Stockholm (SE)
(72) Inventor: HU, Rong, Beijing 100016 (CN); LUNDEVALL, Magnus, S-191 63 Sollentuna (SE); MAGNUSSON, Per, S-587 23 Linköping (SE); SIMONSSON, Arne, S-954 33 Gammelstad (SE)
(74) Representative: Kühn, Friedrich Heinrich
(86) International application number: PCT/SE2005/001373
(87) International publication number: WO 2007/035134

(56) References cited:
- EP-A2- 1 467 500
- WO-A1-03/047125
- WO-A1-03/058988
- WO-A1-2005/062489
- WO-A1-2005/062489
- US-A1- 2003 081 586
- "3rd Generation Partnership Project; Technical Specification Group Radio Access Network; High Speed Downlink Packet Access (HSDPA); Overall description; Stage 2 (Release 6)", 3GPP STANDARD; 3GPP TS 25.308, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V6.3.0, 1 December 2004 (2004-12-01), pages 1-28, XP050367593,

## Description

### Field of the invention

The present invention relates to a mobile telecommunication network. In particular, it relates to optimization of the NodeB power utilization during High Speed Downlink Packet Access (HSDPA) transmissions.

### Background

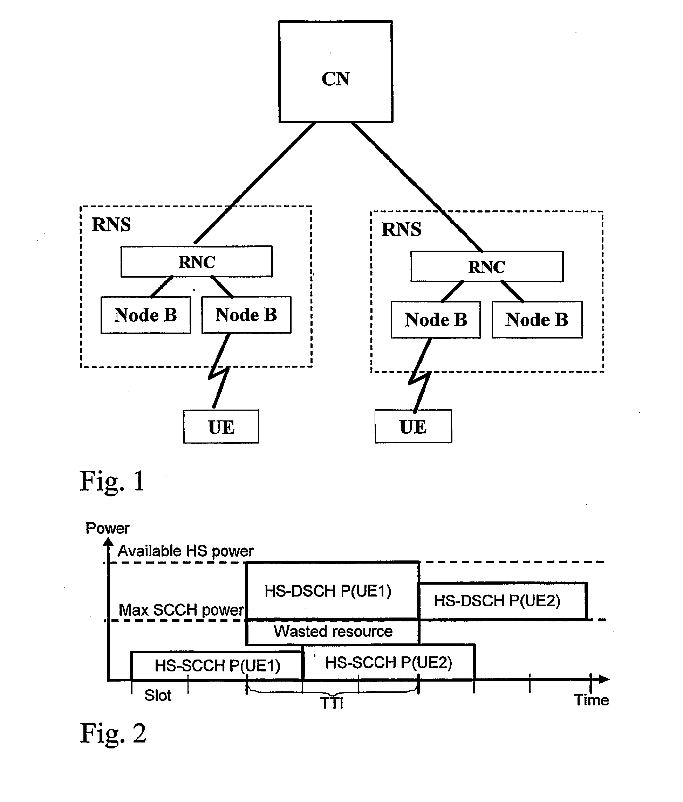

The present invention relates to methods and arrangements in a Node B in a UMTS terrestrial radio access network (UTRAN). The UTRAN is illustrated in **Figure 1** and comprises at least one Radio Network System 100 connected to the Core Network (CN) 200. The CN is connectable to other networks such as the Internet, other mobile networks e.g. GSM systems and fixed telephony networks. The RNS 100 comprises at least one Radio Network Controller 110. Furthermore, the respective RNC 110 controls a plurality of Node-Bs 120,130 that are connected to the RNC by means of the lub interface 140. Each Node B, also referred to as base station, covers one or more cells and is arranged to serve the User Equipment (UE) 300 within said cell. Finally, the UE 300, also referred to as mobile terminal, is connected to one or more Node Bs over the Wideband Code Division Multiple Access (WCDMA) based radio interface 150.

Requirements for mobile data access are increasing and demand for bandwidth is growing. To meet these needs the HSDPA specification has been defined. HSDPA is based on WCDMA evolution standardized as part of 3GPP Release 5 WCDMA specifications. HSDPA is a packet-based data service in WCDMA downlink with data transmission peak rate up to 14.4 Mbps over a 5MHz bandwidth. Thus HSDPA improves system capacity and increases user data rates in the downlink direction. The improved performance is based on adaptive modulation and coding, a fast scheduling function and fast retransmissions with soft combining and incremental redundancy. The adaptive modulation and coding makes it possible to adapt the modulation scheme and coding according to the quality of the radio link. The fast scheduling function of the transmission of data packets over the radio interface is performed in the base station based on information about the channel quality, terminal capability, QoS class and power/code availability. The scheduling is denoted fast because it is performed as close to the radio interface as possible and because a short frame length is used. Fast retransmission implies that the requests for retransmission are performed by the base station instead of the Radio Network Controller (RNC) as in traditional WCDMA systems. By implementing the retransmission function in the base station instead of the RNC it is possible to achieve a faster retransmission.

HSDPA utilizes a transport channel named the High Speed Downlink Shared Channel (HS-DSCH) that makes efficient use of valuable radio frequency resources and takes bursty packet data into account. This is a shared transport channel which means that resources, such as channelization codes, transmission power and infra structure hardware, is shared between several users. When one user has sent a data packet over the network, another user gets access to the resources and so fourth. In other words, several users can be time multiplexed so that during silent periods, the resources are available to other users. On the other hand, several users can share the resource simultaneously by code multiplexing. Furthermore, HSDPA utilizes a control channel named the High Speed Shared Control Channel (HS-SCCH) that serves the purpose of informing which UE that is to receive the HS-DSCH in the next time period. The HS-SCCH also tells the scheduled UE about transmission parameters of the HS-DSCH.

The HS-SCCH channel has fixed control information content and thereby, the required transmission power need to be adjusted according to the radio channel quality to be received by the UE. The HS-DSCH has variable payload information content for best effort data and the amount of data is adapted to the available power and radio channel quality.

The transmission time in a WCDMA system is divided into Transmission Time Intervals (TTls). The TTI length for the HS-DSCH equals 2 ms, i.e. three slots as shown in figure 2. The timing for the High Speed Shared Control Channel (HS-SCCH) is two slots ahead of the HS-DSCH for a particular UE. That depends on that information such as transport format, UE identity and channelization code set is sent on the HS-SCCH in order to prepare the UE for receiving data on the HS-DSCH.

Due to the staggered timing of the High Speed Downlink Shared Channel (HS-DSCH) and the High Speed Shared Control Channel (HS-SCCH) transmissions as shown in **Figure 2**, the base station usually adopts a relatively conservative solution when the available power for the HS-DSCH is estimated by assuming that the HS-SCCH transmission for the next TTI will be the maximum hallowed HS-SCCH power. Thus, resources may-be wasted (denoted wasted resource) if the maximal allowed HS-SCCH is not required to be used shown in **Figure 2****.** It sitould be noted that this application relates to the case when the HS-SCCH power is set individual for each UE.

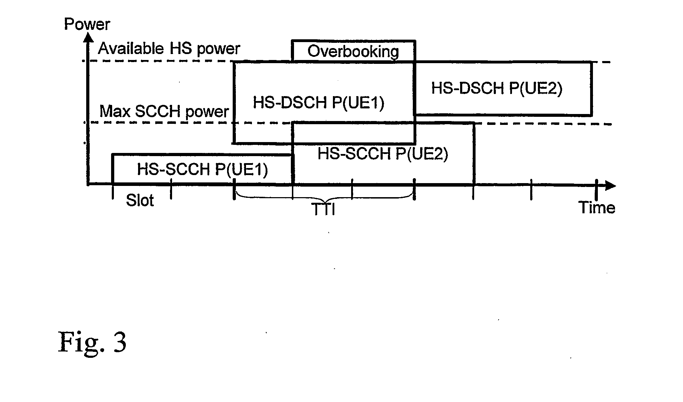

An alternative solution is to use the actual left power for the HS-DSCH, and not to assume that the maximal HS-SCCH power is used. However in this solution, there is a risk that the total power level exceeds the available total power level due to the staggered timing of HS-DSCH and HS-SCCH. I.e. the selected power of the HS-DSCH for a first scheduled UE together with the HS-SCCH power of a subsequently scheduled second UE may exceed the available HS power. This overbooking is illustrated in **Figure 3****.** Due to the risk of overbooking the downlink, power limiting functions in the base station will usually reduce power for all channels (including common control channels and traffic channels) and eventually degrade the quality of all on going connections in the cell.

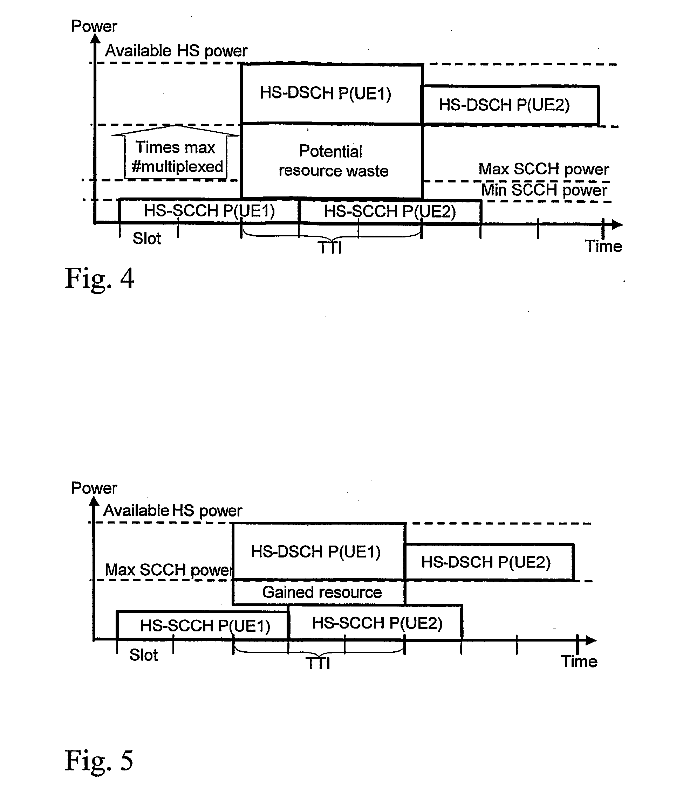

The problem with the trade-off between overbooking risk vs. under utilization of power will increase in the case of code multiplexing. I.e. a multiple of users are code-multiplexed onto the same TTI. In that case there is one HS-SCCH for each multiplexed user. Thus, it will be a large waste of power to reserve the maximal HS-SCCH power times the maximal number of multiplexed users. The potential resource waste is illustrated in **Figure 4**.

One prior art approach is disclosed in EP 1 467 500, which shows a radio communications control system that controls the transmission power of the shared control channel transmitting control signals to a plurality of mobile stations. The transmission power of the shared control channel is set to secure more transmission power for the shared packet channel transmitting packet data to the plurality of mobile stations. Disclosed embodiments show that the transmission timing of the shared control channel and shared packet channel deviate from each other. This prior art approach uses a statistical value, e.g. an average value, of transmission power per each shared control channel which have been transmitted to determine an instantaneous transmission power of a shared control channel.

Another prior art approach is shown in WO 03/047125, which discloses a CDMA system that selects which mobile station should receive transmission during a first time period on a downlink shared channel. A second mobile station to receive transmission on the downlink shared channel during a second time period is selected prior to the first time period. The transmission power of the downlink shared channel is determined based on the transmission power of a shared control channel. The shared control channel has two time slots none of which overlaps the transmission of data to the corresponding mobile station.

Thus, an object of the present invention is to provide a method and arrangements that utilize the power of the base station more efficiently than existing solutions when channels with staggered timing are used, which results in higher system performance in terms of higher throughput, higher user bit rate, decreased delay and enhanced system capacity.

### Summary of the invention

The object of the present invention is achieved by the method according to claim 1, the computer program products of claims 7 and 8 and the arrangement of claim 9.

Preferred embodiments are defined by the dependent claims.

The method in a base station of a mobile telecommunication network according to the present invention makes it possible to utilize the power of the base station more efficiently than existing solutions when channels with staggered timing are used, which results in higher system performance in terms of higher throughput, higher user bit rate, decreased delay and enhanced system capacity. Said base station comprises means for transmitting information to User Equipments (UEs) on a first channel and for transmitting data packets to said UEs on a second channel and wherein the timing of the first channel and second channel is overlapping, according to the present invention. The method comprises the step of setting individual power levels of the first channel for each scheduled UE, and setting the power level of the second channel for a first scheduled UE based on the power level setting for the first channel for at least a subsequently scheduled second UE based on an early UE scheduling decision and scheduling the UEs in such a way that UEs with similar first channel power needs are scheduled in sequence.

The computer program according to the present invention product directly loadable into the internal memory of a computer within a base station, comprising the software code portions for performing the steps of said method makes it possible to utilize the power of the base station more efficiently than existing solutions when channels with staggered timing are used, which results in higher system performance in terms of higher throughput, higher user bit rate, decreased delay and enhanced system capacity.

The computer program product according to the present invention stored on a computer usable medium, comprising readable program for causing a computer, within a base station, to control an execution of the steps of said method makes it possible to utilize the power of the base station more efficiently than existing solutions when channels with staggered timing are used, which results in higher system performance in terms of higher throughput, higher user bit rate, decreased delay and enhanced system capacity.

The base station of a mobile telecommunication network according to the present invention, makes it possible to utilize the power of the base station more efficiently than existing solutions when channels with staggered timing are used, which results in higher system performance in terms of higher throughput, higher user bit rate, decreased delay and enhanced system capacity. Said base station comprises means for transmitting information to User Equipments on a first channel and means for transmitting data packets to said UEs on a second channel and wherein the timing of the first channel and second channel is overlapping. Further, the base station comprises means for setting individual power levels of the first channel for each scheduled UE and means for setting the power level of the second channel for a first scheduled UE based on the power level setting for the first channel for at least a subsequently scheduled second UE based on an early UE scheduling decision, and further comprises means for scheduling the UEs in such a way that UEs with similar first channel power needs are scheduled in sequence.

According to one embodiment of the present invention, the power level setting of the second channel for a first scheduled UE is based on the power level setting for the first channel for a subsequently scheduled second UE for at least a next transmission time interval.

According to a further embodiment of the present invention, the power level setting of the second channel for a first scheduled UE is based on the power level setting for the first channel for a subsequently scheduled second UE for the next two transmission time intervals.

According to a further embodiment of the present invention, the early scheduling decision is treated as a tentative decision for the purpose of the setting of the power level of the second channel for a first scheduled UE based on the power level setting for the first channel for a subsequently scheduled second UE.

According to a further embodiment, the base station is adapted for High Speed Downlink Packet Access, HSDPA and that the first channel is a High Speed Shared Control Channel, HS-SCCH, and that the second channel is a High Speed Downlink Shared Channel, HS-DSCH.

According to a further embodiment, multiple UEs are code multiplexed onto the same transmission time interval.

An advantage of the present invention is that it improves the system performance greatly when code multiplexing is employed. In particular, the performance of code multiplexing is improved in the case when the number of code multiplexed users varies from TTI to TTI. In this case, the number of HS-SCCHs also vary and state of the art solutions become very inefficient.

A further advantage is that it makes it possible to avoid or decrease the overload risk in the alternative solution wherein the remaining power from the HS-SCCH is used for the HS-DSCH as described above.

### Brief description of the drawings

**Figure 1** illustrates schematically a WCDMA network wherein the present invention may be implemented.
**Figure 2** illustrates graphically when the maximal SCCH power is used when the HS-DSCH power is estimated.
**Figure 3** illustrates graphically when the actual SCCH power is used when the HS-DSCH power is estimated.
**Figure 4** illustrates graphically the potential power waste in the case of code multiplexing.
**Figure 5** illustrates graphically the proposed solution according to the present invention of improving the power utilization.
**Figures 6a and 6b** illustrates graphically the gain achieved with HS-SCCH variation based scheduling according to an embodiment of the present invention.
**Figure 7** illustrates UEs scheduled for transmission.
**Figure 8** illustrates graphically reordering of users scheduled for transmission in order to gain resources according to a further embodiment of the present invention.

### Detailed Description of the Invention

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

The present invention relates to a method and arrangements in a base station of a mobile telecommunication network. The base station comprises means for communicating with User Equipments (UEs) on a first channel and on a second channel and wherein the timing of the first channel and second channel is overlapping. The method comprises the steps of setting individual power levels of the first channel for each scheduled UE and setting the power level of the second channel for a first scheduled UE based on the power level setting for the first channel for at least a subsequently scheduled second UE based on an earty UE scheduling decision for at least the second UE. The UEs are scheduled in such a way that UEs with similar first channel power needs are scheduled in sequence.

The present invention is preferably, but not necessary, implemented in a base station adapted for HSDPA, wherein the first channel is a HS-SCCH and the second channel is a HS-DSCH. It should be noted that the present invention is also applicable to other channels having a staggered timing and a power level setting that depends on each other and consecutive time frames/slots.

Thus in the case of HSDPA, the object of the present invention is achieved by utilizing that the HS-SCCH sub-frame is transmitted 2 slots prior to the start of the HS-DSCH sub-frame for a particular UE. The basic idea is to do a scheduling decision on the power level for the HS-DSCH for a first UE, based on the power level of the HS-SCCH for early subsequently scheduled UEs. The scheduling decision for the HS-DSCH is based on the power level for the HS-SCCH of at least the next TTI, but preferably of the next two TTIs. The proposed power utilization solution is illustrated in **Figure 5**. The power level of the HS-SCCH may be determined by using an indication of the channel quality, e.g. by using the existing parameter Channel Quality Indicator (CQI).

The power level setting of the HS-DSCH according to the present invention is described by the following example. Suppose TTI 1 is used for UE1 and TTI 2 is used for UE2, P1 is the estimated HS-SCCH power for TTI 1, P2 is the estimated HS-SCCH power for the TTI 2, then the estimated HS-DSCH power for UE1 is
P (UE1 HS-DSCH)=P(tot) - P(Non-HS) - max(P1, P2), i.e.,
if P2 <= P1, P(UE1 HS-DSCH)=P(tot) - P(Non-HS) - P1;
if P2>P1, P(UE1 HS-DSCH)=P(tot) - P(Non-HS) - P2;
If no UE (or UE1 again) is scheduled for the next TTI (i.e., P2 does not exist), P(UE1 HS-DSCH)=P(tot) - P(Non-HS) - P1;
P(Non-HS) is the available power used for dedicated channels and common control channels, wherein the power of the common control channels are fix while the power of the dedicated channels varies.

P(tot) is the total power, i.e. P(tot)= P(Non-HS) + power of the HS-DSCH + power of the HS-SCCH.

In this way, efficient power utilization can be obtained while keeping the overload risks at a minimum. Thus, resources will be gained compared to the prior art solution as illustrated in **figure 5**.

According to one embodiment of the present invention, the early scheduling decision of which UE to be scheduled is treated as a tentative decision for the purpose of the power-setting algorithm according to the invention due to the fact that the scheduling decisions must be made one TTI earlier and thus be based on somewhat older information such as CQI report, transmitter buffer status, etc. In the next TTI, the final scheduling decision is made. If the same user is selected, an optimal power utilization is reached. In this way, the lowest possible scheduling decision delay is maintained, while efficient power utilization can be achieved most part of the time.

The decision whether to override the tentative scheduling or not is in this embodiment based on the amount of overbooking. If a new scheduled packet results in a large overbooking with the risk of major degradation of all transmissions the original tentative packet can be sent by delaying the new packet one TTI. If the amount of power overbooking is low resulting in minor performance degradation the new packet is scheduled. This is according to a further embodiment of the present invention controlled by a parameter, for example a threshold in dB.

According to a further embodiment of the present invention, the scheduling of UEs are adjusted in such a way that UEs with similar first channel, e.g. HS-SCCH power needs are scheduled in sequence in order to minimize the variations in first channel, e.g. HS-SCCH power.

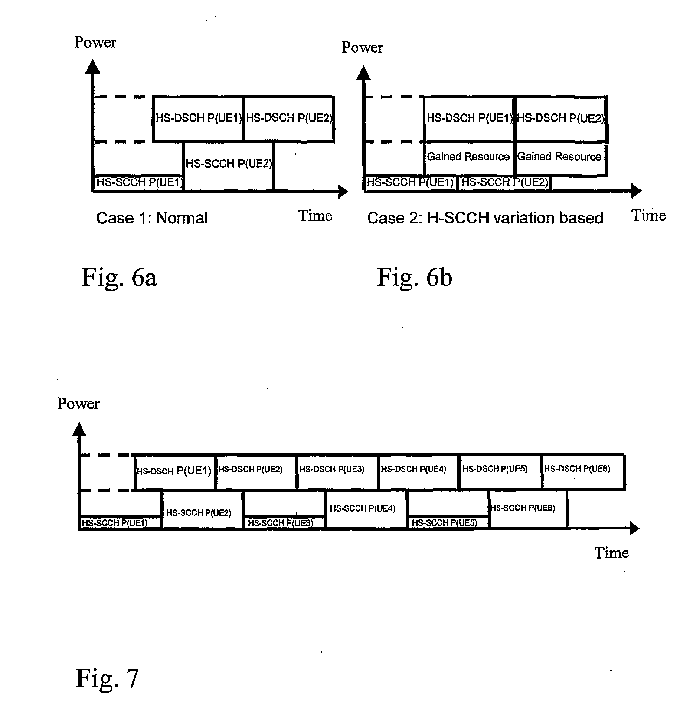

By keeping the HS-SCCH power variations small between subsequent users a larger portion of the remaining power for other reasons such as HS-DSCH is enabled to be used. The resources to be gained by scheduling the UEs in such a way that UEs with similar first channel (e.g. HS-SCCH) power needs are scheduled in sequence is shown in **figure 6b** compared with the conventional scheduling is shown in **figure 6a**.

One drawback with this solution according to the further embodiment in the case of HSDPA is that the scheduling mechanism is required to be affected in a way that the scheduling algorithm considers the required HS-SCCH power for each user. However, in practice, this drawback is often negligible. The reason is that most scheduling algorithms relies on CQI measurements as input and these are typically only received every n:th TTI in order to keep control signalling overhead on a reasonable level. This means that there is a pool of UEs that can be reordered without affecting the main goal of the scheduling algorithm. If the reordering is performed so that HS-SCCH power variations are minimized between subsequent UEs it is possible to take advantage of the gained resource without affecting the main goal of the radio-channel dependent scheduling algorithm.

This further embodiment is illustrated by the following example. Assume that there is a pool of 6 UEs, UE 1, 2, 3, 4, 5 and 6, that have been scheduled for transmission by the scheduling algorithm according to **figure 7**.

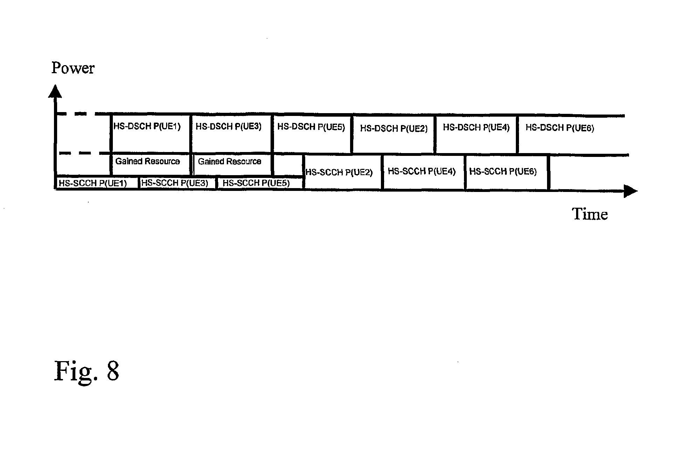

By reordering the users in the order 1, 3, 5, 2, 4 and 6 according to **figure 8**, the HS-SCCH power variations are minimized and it is hence possible to release downlink power resources (denoted gained resource) that can be used for other purposes such as increasing the data rate for HS-DSCH transmissions.

In the case of code multiplexing, the gain potential for HS-SCCH variation based scheduling is even higher due to that the HS-SCCH power consumes a larger amount of the total downlink power resource and that it is enough to minimize the variations for the sum of the HS-SCCH power for all scheduled UEs per TTI. With code multiplexing there is an additional parameter to utilize, the number of multiplexed users per TTI. Since the total power for the HS-SCCH power then is the sum of all multiplexed users HS-SCCH power this gives a finer granularity to control the power. It applies to the reordering where the it is enough to reorder to minimize the sum of HS-SCCH power variation. It also applies to the delayed packets in case of large overbooking where not all packets have to be delayed but only the amount to lower the power below the threshold.

Thus, the method according to the present invention comprises the step:
Set the power level of the second channel, e.g. the HS-DSCH, for a first scheduled UE based on the power level setting for the first channel, e.g. the HS-SCCH, for at least a subsequently scheduled second UE based on an early UE scheduling decision for at least the second UE.

The method is according to one aspect implemented in a base station. Thus, the base station according to the present invention comprises means for setting the power level of the second channel, e.g. the HS-DSCH, for a first scheduled UE based on the power level setting for the first channel, e.g. the HS-SCCH, for at least a subsequently scheduled second UE based on an early UE scheduling decision for at least the second UE.

Furthermore, a computer program product may preferably implement the method of the present invention. Thus the present invention relates to a computer program product directly loadable into a processing means in a base station, comprising the software code means for performing the steps of said method.

The present invention also relates to a computer program product stored on a computer usable medium, comprising readable program for causing a processing means in a base station, to control the execution of the steps of said method.

The present invention is not limited to the above-described preferred embodiments. Various alternatives, modifications and equivalents may be used. Therefore, the above embodiments should not be taken as limiting the scope of the invention, which is defined by the appending claims.

## Claims

1. A method in a base station of a mobile telecommunication network, wherein the base station comprises means for transmitting information to User Equipments, UEs, on a first channel and means for transmitting data packets to said UEs on a second channel, wherein the transmission timing of the first channel and second channel to a first UE is overlapping, the method comprises the step of:
- setting individual power levels of the first channel for each scheduled UE,
- setting the power level of the second channel for a first scheduled UE based on the power level setting for the first channel for at least a subsequently scheduled second UE based on an early UE scheduling decision, wherein the method is **characterized in that** it comprises the further step of:
- scheduling the UEs in such a way that UEs with similar first channel power needs are scheduled in sequence.

2. The method of claim 1, **characterised in that** the step of setting the power level of the second channel for a first scheduled UE is based on the power level setting for the first channel for a subsequently scheduled second UE for at least a next transmission time interval.

3. The method of claim 2, **characterised in that** the step of setting the power level of the second channel for a first scheduled UE is based on the power levels setting for the first channel for a subsequently scheduled second UE for the next two transmission time intervals.

4. The method of any of claims 1-3, **characterised in that** it comprises the further step of:
- treating the early scheduling decision as a tentative decision for the purpose of the setting of the power level of the second channel for the first scheduled UE based on at least the power level setting for the first channel for the subsequently scheduled second UE.

5. The method according to any of claims 1-4, **characterised in that** the base station is adapted for High Speed Downlink Packet Access, HSDPA and that the first channel is a High Speed Shared Control Channel, HS-SCCH, and that the second channel is a High Speed Downlink Shared Channel, HS-DSCH.

6. The method according to any of claims 1-5, **characterised in that** multiple UEs are code multiplexed onto the same transmission time interval.

7. A computer program product directly loadable into the internal memory of a computer within a base station, comprising the software code portions for performing the steps of any of claims 1-6.

8. A computer program product stored on a computer usable medium, comprising readable program for causing a computer, within a base station, to control an execution of the steps of any of the claims 1-6.

9. A base station of a mobile telecommunication network, comprising means for transmitting information to User Equipments,UEs, on a first channel and means for transmitting data packets to said UEs on a second channel, wherein the transmission timing of the first channel and second channel to a first UE is overlapping, the base station comprises means for setting individual power levels of the first channel for each scheduled UE and means for setting the power level of the second channel for a first scheduled UE based on the power level setting for the first channel for at least a subsequently scheduled second UE based on an early UE scheduling decision,
**characterized in that** it comprises means for scheduling the UEs in such a way that UEs with similar first channel power needs are scheduled in sequence.

10. The base station according to claim 9, **characterised in that** the means for setting the power level of the second channel for a first scheduled UE is adapted to base said power level setting of the second channel on the power level setting for the first channel for a subsequently scheduled second UE for at least a next transmission time interval.

11. The base station according to claim 10, **characterised in that** the means for setting the power level of the second channel for a first scheduled UE is adapted to base said power level setting of the second channel on the power level setting for the first channel for a subsequently scheduled second UE for the next two transmission time intervals.

12. The base station according to any of claims 9-11, **characterised in that** it comprises means for treating the early scheduling decision as a tentative decision for the purpose of the setting of the power level of the second channel for a first scheduled UE based on at least the power level setting for the first channel for a subsequently scheduled second UE.

13. The base station according to any of claims 9-12, **characterised in that** the base station is adapted for High Speed Downlink Packet Access, HSDPA and that the first channel is a High Speed Shared Control Channel, HS-SCCH, and that the second channel is a High Speed Downlink Shared Channel, HS-DSCH.

14. The base station according to any of claims 9-13, **characterised in that** multiple UEs are code multiplexed onto the same transmission time interval.

## Patentansprüche

1. Verfahren in einer Basisstation eines Mobiltelekommunikationsnetzes, wobei die Basisstation umfasst: ein Mittel zum Übertragen von Information an Benutzereinrichtungen, UEs, auf einem ersten Kanal und ein Mittel zum Übertragen von Datenpaketen an diese UEs auf einem zweiten Kanal, wobei der Übertragungstakt des ersten Kanals und des zweiten Kanals zu einer ersten UE sich überlappt, wobei das Verfahren den folgenden Schritt umfasst:
- Einstellen einzelner Leistungspegel des ersten Kanals für jede geplante UE,
- Einstellen des Leistungspegels des zweiten Kanals für eine erste geplante UE auf der Grundlage der Leistungspegeleinstellung für den ersten Kanal für mindestens eine nachfolgend geplante zweite UE auf der Grundlage einer frühzeitigen UE-Planungsentscheidung, wobei das Verfahren **dadurch gekennzeichnet ist, dass** es die folgenden weiteren Schritt umfasst:
- Planen der UEs in einer Weise, dass UEs mit ähnlichem Erstkanalleistungsbedarf aufeinander folgend geplant werden.

2. Verfahren nach Anspruch 1, **dadurch gekennzeichnet, dass** der Schritt der Einstellung des Leistungspegels des zweiten Kanals für eine erste geplante UE auf der Leistungspegeleinstellung für den ersten Kanal für eine nachfolgend geplante zweite UE für mindestens ein nächstes Übertragungszeitintervall beruht.

3. Verfahren nach Anspruch 2, **dadurch gekennzeichnet, dass** der Schritt der Einstellung des Leistungspegels des zweiten Kanals für eine erste geplante UE auf der Leistungspegeleinstellung für den ersten Kanal für eine nachfolgend geplante zweite UE für die nächsten beiden Übertragungszeitintervalle beruht.

4. Verfahren nach einem der Ansprüche 1 bis 3, **dadurch gekennzeichnet, dass** es den folgenden weiteren Schritt umfasst:
- Behandeln der frühzeitigen Planungsentscheidung als vorläufige Entscheidung zum Zweck der Einstellung des Leistungspegels des zweiten Kanals für die erste geplante UE auf der Grundlage mindestens der Leistungspegeleinstellung für den ersten Kanal für die nachfolgend geplante zweite UE.

5. Verfahren nach einem der Ansprüche 1 bis 4, **dadurch gekennzeichnet dass** die Basisstation für High Speed-Downlink Packet Access, HSDPA, eingerichtet ist und dass der erste Kanal ein High Speed-Shared Control Channel, HS-SCCH, ist und dass der zweite Kanal ein High Speed-Downlink Shared Channel, HS-DSCH, ist.

6. Verfahren nach einem der Ansprüche 1 bis 5, **dadurch gekennzeichnet, dass** mehrere UEs in dem gleichen Übertragungszeitintervall codemultiplexiert sind.

7. Computerprogrammprodukt, das direkt in den internen Speicher eines Computers in einer Basisstation geladen werden kann, umfassend die Softwarecodeteile zum Ausführen der Schritte nach einem der Ansprüche 1 bis 6.

8. Computerprogrammprodukt, das auf einem computernutzbaren Medium gespeichert ist, umfassend lesbares Programm, mit dem ein Computer in einer Basisstation eine Ausführung der Schritte nach einem der Ansprüche 1 bis 6 steuern kann.

9. Basisstation eines Mobiltelekommunikationsnetzes, umfassend ein Mitteln zum Übertragen von Information an Benutzergeräte, UEs, auf einem ersten Kanal und ein Mittel zum Übertragen von Datenpaketen an diese UEs auf einem zweiten Kanal, wobei der Übertragungstakt des ersten Kanals und des zweiten Kanals zu einer ersten UE sich überlappt, wobei die Basisstation ein Mittel zum Einstellen einzelner Leistungspegel des ersten Kanals für jede geplante UE und ein Mittel zum Einstellen des Leistungspegels des zweiten Kanals für eine erstes geplante UE auf der Grundlage der Leistungspegeleinstellung für den ersten Kanal für mindestens eine nachfolgend geplante zweite UE auf der Grundlage einer frühzeitigen UE-Planungsentscheidung umfasst,
**dadurch gekennzeichnet, dass** sie ein Mittel zum Planen der UEs in einer Weise umfasst, dass UEs mit ähnlichem Erstkanalleistungsbedarf aufeinander folgend geplant werden.

10. Basisstation nach Anspruch 9, **dadurch gekennzeichnet, dass** das Mittel zum Einstellen des Leistungspegels des zweiten Kanals für eine erste geplante UE dafür eingerichtet ist, die Leistungspegeleinstellung des zweiten Kanals auf die Leistungspegeleinstellung für den ersten Kanal für eine nachfolgend geplante zweite UE für mindestens ein nächstes Übertragungszeitintervall zu stützen.

11. Basisstation nach Anspruch 10, **dadurch gekennzeichnet, dass** das Mittel zum Einstellen des Leistungspegels des zweiten Kanals für eine erste geplante UE dafür eingerichtet ist, die Leistungspegeleinstellung des zweiten Kanals auf die Leistungspegeleinstellung für den ersten Kanal für eine nachfolgend geplante zweite UE für die nächsten beiden Übertragungszeitintervalle zu stützen.

12. Basisstation nach einem der Ansprüche 9 bis 11, **dadurch gekennzeichnet, dass** sie ein Mittel zur Behandlung der frühzeitigen Planungsentscheidung als vorläufige Entscheidung zum Zweck der Einstellung des Leistungspegels des zweiten Kanals für eine erste geplante UE auf der Grundlage mindestens der Leistungspegeleinstellung für den ersten Kanal für eine nachfolgend geplante zweite UE umfasst.

13. Basisstation nach einem der Ansprüche 9 bis 12, **dadurch gekennzeichnet, dass** die Basisstation für High Speed-Downlink Packet Access, HSDPA, eingerichtet ist und dass der erste Kanal ein High Speed-Shared Control Channel, HS-SCCH, ist und dass der zweite Kanal ein High Speed-Downlink Shared Channel, HS-DSCH, ist.

14. Basisstation nach einem der Ansprüche 9 bis 13, **dadurch gekennzeichnet, dass** mehrere UEs in dem gleichen Übertragungszeitintervall codemultiplexiert sind.

## Revendications

1. Procédé mis en oeuvre dans une station de base d'un réseau de télécommunication mobile, dans lequel la station de base comprend un moyen pour transmettre des informations à des équipements d'utilisateur, UE, sur un premier canal, et un moyen pour transmettre des paquets de données auxdits équipements UE sur un second canal, dans lequel la temporisation de transmission du premier canal et du second canal à un premier équipement UE est en chevauchement, le procédé comportant l'étape ci-dessous consistant à :
- définir des niveaux de puissance individuels du premier canal pour chaque équipement UE planifié ;
- définir le niveau de puissance du second canal pour un premier équipement UE planifié, sur la base de la définition de niveaux de puissance du premier canal pour au moins un second équipement UE planifié subséquemment sur la base d'une décision de planification d'équipement UE antérieure, dans lequel le procédé est **caractérisé en ce qu'**il comprend l'étape supplémentaire ci-dessous consistant à :
- planifier les équipements UE d'une manière telle que les équipements UE présentant des exigences de puissance de premier canal similaires sont planifiés en séquence.

2. Procédé selon la revendication 1, **caractérisé en ce que** l'étape de définition du niveau de puissance du second canal pour un premier équipement UE planifié est basée sur la définition de niveaux de puissance du premier canal pour un second équipement UE planifié subséquemment pour au moins un intervalle de temps de transmission successif.

3. Procédé selon la revendication 2, **caractérisé en ce que** l'étape de définition du niveau de puissance du second canal pour un premier équipement UE planifié est basée sur la définition de niveaux de puissance du premier canal pour un second équipement UE planifié subséquemment pour les deux intervalles de temps de transmission successifs.

4. Procédé selon l'une quelconque des revendications 1 à 3, **caractérisé en ce qu'**il comprend l'étape supplémentaire ci-dessous consistant à :
- traiter la décision de planification antérieure comme une décision provisoire aux fins de la définition du niveau de puissance du second canal pour le premier équipement UE planifié, sur la base d'au moins la définition de niveaux de puissance du premier canal pour le second équipement UE planifié subséquemment.

5. Procédé selon l'une quelconque des revendications 1 à 4, **caractérisé en ce que** la station de base est adaptée en vue d'un accès par paquets en liaison descendante haut débit, HSDPA **en ce que** le premier canal est un canal de commande partagé haut débit, HS-SCCH, et **en ce que** le second canal est un canal partagé en liaison descendante haut débit, HS-DSCH.

6. Procédé selon l'une quelconque des revendications 1 à 5, **caractérisé en ce que** de multiples équipements UE sont multiplexés en code sur le même intervalle de temps de transmission.

7. Produit-programme informatique pouvant être chargé directement dans la mémoire interne d'un ordinateur au sein d'une station de base, comprenant les parties de code de logiciel pour mettre en oeuvre les étapes selon l'une quelconque des revendications 1 à 6.

8. Produit-programme informatique stocké sur un support utilisable par ordinateur, comprenant un programme lisible destiné à amener un ordinateur, au sein d'une station de base, à commander une exécution des étapes selon l'une quelconque des revendications 1 à 6.

9. Station de base d'un réseau de télécommunication mobile, comprenant un moyen pour transmettre des informations à des équipements d'utilisateur, UE, sur un premier canal, et un moyen pour transmettre des paquets de données auxdits équipements UE sur un second canal, dans lequel la temporisation de transmission du premier canal et du second canal à un premier équipement UE est en chevauchement, la station de base comportant un moyen pour définir des niveaux de puissance individuels du premier canal pour chaque équipement UE planifié et un moyen pour définir le niveau de puissance du second canal pour un premier équipement UE planifié, sur la base de la définition de niveaux de puissance du premier canal pour au moins un second équipement UE planifié subséquemment sur la base d'une décision de planification d'équipement UE antérieure,
**caractérisée en ce qu'**elle comporte un moyen pour planifier les équipements UE d'une manière telle que les équipements UE présentant des exigences de puissance de premier canal similaires sont planifiés en séquence.

10. Station de base selon la revendication 9, **caractérisée en ce que** le moyen pour définir le niveau de puissance du second canal pour un premier équipement UE planifié est apte à baser ladite définition de niveaux de puissance du second canal sur la définition de niveaux de puissance du premier canal pour un second équipement UE planifié subséquemment pour au moins un intervalle de temps de transmission successif.

11. Station de base selon la revendication 10, **caractérisée en ce que** le moyen pour définir le niveau de puissance du second canal pour un premier équipement UE planifié est apte à baser ladite définition de niveaux de puissance du second canal sur la définition de niveaux de puissance du premier canal pour un second équipement UE planifié subséquemment pour les deux intervalles de temps de transmission successifs.

12. Station de base selon l'une quelconque des revendications 9 à 11, **caractérisée en ce qu'**elle comporte un moyen pour traiter la décision de planification antérieure comme une décision provisoire aux fins de la définition du niveau de puissance du second canal pour un premier équipement UE planifié, sur la base d'au moins la définition de niveaux de puissance du premier canal pour un second équipement UE planifié subséquemment.

13. Station de base selon l'une quelconque des revendications 9 à 12, **caractérisée en ce que** la station de base est adaptée en vue d'un accès par paquets en liaison descendante haut débit, HSDPA, **en ce que** le premier canal est un canal de commande partagé haut débit, HS-SCCH, et **en ce que** le second canal est un canal partagé en liaison descendante haut débit, HS-DSCH.

14. Station de base selon l'une quelconque des revendications 9 à 13, **caractérisée en ce que** de multiples équipements UE sont multiplexés en code sur le même intervalle de temps de transmission.
